# EUROPEAN PATENT SPECIFICATION

(11) **EP 0 808 564 B1**
(45) Date of publication and mention of the grant of the patent: **10.10.2001**
(21) Application number: 97107987.6
(22) Date of filing: 16.05.1997
(51) Int. Cl.: A01K 1/015

(54) **Horse-bedding**
Pferdestreu
Litière pour chevaux

(30) Priority: 22.05.1996 IT GE960047
(43) Date of publication of application: 26.11.1997
(73) Proprietor: AGRICOMBI S.r.l, 25046 Cazzago San Martino, Province of Brescia (IT)
(72) Inventor: Pedemonte, Giovanni, 15010 Cremolino, Province of Alessandria (IT)
(74) Representative: Alagem Modiano, Lara S.

(56) References cited:
- EP-A- 0 408 102
- EP-A- 0 579 548
- EP-A- 0 658 350
- FR-A- 2 669 505
- FR-A- 2 705 863
- NL-A- 8 900 115
- US-A- 5 154 594

## Description

The present invention relates to bedding for stalled animals, and in particular regards bedding for horses.

Normally, in stables for horses, the bedding that is laid on the floor is generally made up of wood shavings with the purpose of absorbing the dejections of the animals. When not properly managed, said bedding may provide a convenient culture medium for fungi and bacteria that are pathogenic both for horses and for man. In addition, the gases that are developed by fermentation of the manure, such as NH₃ and H₂S, generally cause a certain amount of harm to the animal which lives in continuous contact with them. The part of dejections absorbed by the bedding may host, as has already been said, pathogenic fungi, such as the fungus that causes onychomycosis, the so-called nail ringworm.

To improve hygienic conditions, it has been proposed to use biological preparations containing pro-enzymes, which are precursors of active enzymatic forms that act on the dejection materials, as well as selected bacteria that are able to metabolise the same. However, these preparations are added in a rough manner to the bedding, since they are generally spread on the bedding by hand. This inevitably leads to low yield of the bacterial-enzymatic composition used, above all on account of its altogether random distribution in the bedding material. Obviously, ill use of these products, which have a certain value, leads to a rise in running costs.

In document FR-A-2705863 is described a bedding for small animals comprising sawdust and an enzymatic-bacterial composition. However, no specific enzyme or bacteria strain is mentioned in the said description.

In document EP-A-0408102 is described a stable for keeping animals, in which the floor is formed by a finely divided material acting as a carrier for microbes, but the composition containing the microorganisms is sprayed on the carrier in an aqueous solution, thus resulting in a not uniform distribution of bacteria on the carrier.

Another bedding for animals is described in document EP-A-0579548. This bedding comprises a bacterial complex formed by anaerobic and aerobic bacteria, provided with feeding elements such as molasses and urea, without using any enzyme or proenzyme.

The aim of the present invention is to provide a bedding that is complete in its characteristics, and therefore provided with the much useful enzymes and proenzymes, in so far as it is hygienically more effective and economically more advantageous.

The subject of, the present invention is therefore a bedding for stalled animals, and in particular for horses, which includes a homogeneous mixture of wood shavings and an enzymatic-bacterial composition including at least the precursor of one class of enzymes, one bacterial species, and mineral salts, characterised in that the said pro-enzymes, precursors of the active enzymatic form, comprise amylases, lipases, cellulases, and proteases, and the bacterial species comprise cocci and/or bacilli.

For the preparation of the bedding according to the invention, wood shavings are used, preferably of fir or beech, from which all dust has been removed.

Advantageously it is possible to include in the composition an appropriate culture medium, such as agar-agar, and the presence of mineral salts of Ca and/or Mg, and nucleic acids may also be advisable.

The mixture between wood shavings and enzymatic-bacterial composition may have various formulations. One deems that in mixtures containing less than 0.05 weight% of enzymatic-bacterial composition, the activity of the bedding becomes too low, and the results obtained are unsatisfactory. On the other hand, for mixtures containing more than 0.8% in weight, no improvement is found over percentage values immediately preceding this, in the presence of a considerable increase in costs due to the increase in concentration of the more valuable material.

In particular, mixtures containing from 0.1% to 0.4 weight% of enzymatic-bacterial composition are considered to be more effective; more in particular still, the mixture containing 0.2 weight% of enzymatic-bacterial composition is the most advantageous in terms of cost-activity ratio.

The bedding obtained in this way guarantees the elimination of both the mycotic and bacterial pathogenic forms, such as onychomycosis. Likewise ensured is the elimination of unpleasant smells deriving from the decomposition caused by the pathogenic bacteria. The bedding is drier, and a considerable saving in material is obtained, as well as a manure product of higher agricultural quality.

The present invention will appear evident from the following example of preparation.

### Example of preparation

To 25 kg of fir and/or beech wood shavings from which any dust has been removed are added 50 g of an enzymatic-bacterial composition marketed under the name of BIOPROFESSIONAL by the company EUROVIX, in the form of a powder of mixed grain size, comprising pro-enzymes from α-amylase, β-amylase, pentosanase, gluco-amylase, cellulase, lactase, pancrease, protease, phosphorylase, hemicellulase, pectinase, β-glucanase, β-lactamase, and pullulanase; micrococcus and bacillus bacteria; mineral salts of Ca and Mg; nucleic acids (DNA, RNA); culture medium (agar-agar); mordenite and dolomite; algae of *lithothamnium calcareum;* and active principles of *fucus laminariae*. The wood shavings and the composition are homogeneously mixed and subsequently packaged to be ready for use.

### Example of application

For the bacterial content of a bedding for horses, mainly wood-shaving based, the data recorded were:

| | |
|---|---|
| Total bacterial content | 600,000,000 UFC/g |
| Total coliforms | 25,000,000UFC/g |
| Streptococcus faecalis | 9,000,000 UFC/g |
| Mycetes | 54,000,000UFC/g |

The bedding in question was replaced with the one produced according to the present invention. After a given period of time, the analyses referred to above were repeated, with the following results:

| | |
|---|---|
| Total bacterial content | 120,000 UFC/g |
| Total coliforms | 280,000 UFC/g |
| Streptococcus faecalis | 60,000 UFC/g |
| Mycetes | 900,000 UFC/g |

## Claims

1. Bedding for stalled animals, and in particular for horses, which includes a homogeneous mixture of wood shavings and an enzymatic-bacterial composition including at least the precursor of one class of enzymes, one bacterial species, and mineral salts, **characterised in that** the said pro-enzymes, precursors of the active enzymatic form, comprise amylases, lipases, cellulases, and proteases, and the bacterial species comprise cocci and/or bacilli.

2. Bedding according to Claim 1, in which the composition comprises an appropriate culture medium, such as agar-agar, and mineral salts of Ca and/or Mg.

3. Bedding according to Claim 2, in which said mineral salts are obtained from dolomite and/or mordenite minerals.

4. Bedding according to anyone of the previous claims 1 to 3, in which said enzymatic-bacterial composition includes the enzymes of the following classes: α-amylase, β-amylase,pentosanase, lipase, gluco-amylase, cellulase, hemicellulase, lactase, protease, lipase, phosphorylase, pectinase, β-lactamase, and pullulanase; or their precursors.

5. Bedding according to any one of the previous claims from 1 to 4, in which said homogeneous mixture of wood shavings and enzymatic-bacterial composition contains from 0.05% to 0.8 weight% of said composition referred to the weight of the wood shavings.

6. Bedding according to Claim 3, in which said homogeneous mixture of wood shavings and enzymatic-bacterial composition contains from 0.1% to 0.4 weight% of said composition referred to the weight of the wood shavings.

7. Bedding according to Claim 3, in which said homogeneous mixture of wood shavings and enzymatic-bacterial composition contains 0.2 weight% of said composition referred to the weight of the wood shavings.

## Patentansprüche

1. Unterlage für in Boxen untergebrachte Tiere und insbesondere für Pferde, die eine homogene Mischung von Holzspänen sowie eine enzymatisch-bakterielle Zusammensetzung aufweist, umfassend mindestens einen Vorläufer einer Klasse von Enzymen, eine bakterielle Spezies und Mineralsalze, **dadurch gekennzeichnet, daß** die Proenzyme, Vorläufer der aktiven enzymatischen Form, Amylasen, Lipasen, Cellulasen und Proteasen umfassen und die bakterielle Spezies Cocci- und/oder Bacilli aufweist.

2. Unterlage nach Anspruch 1, worin die Zusammensetzung ein geeignetes Kulturmedium, wie Agar-Agar und Mineralsalze von Calcium und/oder Magnesium, umfaßt.

3. Unterlage nach Anspruch 2, worin die Mineralsalze aus Dolomit- und/oder Mordenitmineralien erhalten werden.

4. Unterlage nach mindestens einem der vorhergehenden Ansprüche 1 bis 3, worin die enzymatisch-bakterielle Zusammensetzung die Enzyme der folgenden Klassen aufweist: α-Amylase, β-Amylase, Pentosanase, Lipase, Gluco-Amylase, Cellulase, Hemicellulase, Lactase, Protease, Lipase, Phosphorylase, Pectinase, β-Lactamase und Pullulanase oder ihre Vorläufer.

5. Unterlage nach mindestens einem der vorhergehenden Ansprüche 1 bis 4, worin die homogene Mischung aus Holzspänen und enzymatisch-bakterieller Zusammensetzung 0,05 bis 0,8 Gew.-% der Zusammensetzung, bezogen auf das Gewicht der Holzspäne, enthält.

6. Unterlage nach Anspruch 3, worin die homogene Mischung aus Holzspänen und enzymatisch-bakterieller Zusammensetzung 0,1 bis 0,4 Gew.-% der Zusammensetzung, bezogen auf das Gewicht der Holzspäne, enthält.

7. Unterlage nach Anspruch 3, worin die homogene Mischung aus Holzspänen und enzymatisch-bakterieller Zusammensetzung 0,2 Gew.-% der Zusammensetzung, bezogen auf das Gewicht der Holzspäne, enthält.

## Revendications

1. Litière pour animaux en stalle, et en particulier pour chevaux, qui comprend un mélange homogène de copeaux de bois et d'une composition enzymatico-bactérienne incluant au moins le précurseur d'une classe d'enzymes, une espèce bactérienne, et des sels minéraux, **caractérisée en ce que** lesdites pro-enzymes, précurseurs de la forme enzymatique active comprennent des amylases, des lipases, des cellulases et des protéases, et les espèces bactériennes comprennent des cocci et/ou des bacilles.

2. Litière selon la revendication 1, dans laquelle la composition comprend un milieu de culture approprié, tel que de l'agar-agar et des sels minéraux de Ca et/ou de Mg.

3. Litière selon la revendication 2, dans laquelle les sels minéraux sont obtenus à partir des minéraux dolomite et/ou mordénite.

4. Litière selon l'une quelconque des revendications précédentes 1 à 3, dans laquelle ladite composition enzymatico-bactérienne inclut les enzymes des classes suivantes : α-amylase, β-amylase, pentosanase, lipase, gluco-amylase, cellulase, hémicellulase, lactase, protéase, lipase, phosphorylase, pectinase, β-lactamase, et pullulanase ; ou leurs précurseurs.

5. Litière selon l'une quelconque des revendications précédentes 1 à 4, dans laquelle ledit mélange homogène de copeaux de bois et de composition enzymatico-bactérienne contient de 0,05 % à 0,8 % en poids de ladite composition rapporté au poids des copeaux de bois.

6. Litière selon la revendication 3, dans laquelle ledit mélange homogène de copeaux de bois et de composition enzymatico-bactérienne contient de 0,1 % à 0,4% en poids de ladite composition rapporté au poids des copeaux de bois.

7. Litière selon la revendication 3, dans laquelle ledit mélange homogène de copeaux de bois et de composition enzymatico-bactérienne contient 0,2 % en poids de ladite composition rapporté au poids des copeaux de bois.
